# EUROPÄISCHE PATENTSCHRIFT

(11) **EP 2 638 555 B1**
(45) Veröffentlichungstag und Bekanntmachung des Hinweises auf die Patenterteilung: **01.10.2014**
(21) Anmeldenummer: 11819092.5
(22) Anmeldetag: 09.11.2011
(51) Int. Cl.: H01H 35/02, H01H 35/14, H01H 1/58, G01C 9/10, G01P 15/135

(54) **BEWEGUNGS- UND LAGEERKENNUNGSSENSOR**
MOVEMENT AND POSITION IDENTIFICATION SENSOR
CAPTEUR POUR LA DÉTECTION DE POSITION ET DE MOUVEMENT

(30) Priorität: 11.08.2011 DE 102011052612; 09.11.2010 DE 102010060456
(43) Veröffentlichungstag der Anmeldung: 18.09.2013
(73) Patentinhaber: Karlsruher Institut für Technologie, 76131 Karlsruhe (DE); Sensolute GmbH, 76344 Eggenstein-Leopoldshafen (DE)
(72) Erfinder: BLANK, Thomas, 76187 Karlsruhe (DE); HAGER, Marco, 76344 Eggenstein-Leopoldshafen (DE); HUBER, Dominic, 77654 Offenburg (DE)
(74) Vertreter: Fitzner, Uwe
(86) Internationale Anmeldenummer: PCT/EP2011/069734
(87) Internationale Veröffentlichungsnummer: WO 2012/062800

(56) Entgegenhaltungen:
- WO-A1-2008/071289
- DE-C1- 3 921 926
- US-A- 5 410 113

## Beschreibung

Die vorliegende Erfindung betrifft einen Bewegungssensor sowie dessen Verwendung zur Lage- und Bewegungsdetektion.

Bewegungssensoren sind seit mehreren Jahrzehnten bekannt. Sie dienen vornehmlich dem Zweck, einfache Bewegungen zu erfassen. Es gibt sie in unterschiedlichen Varianten, wobei allen gemeinsam ist, dass sie eine leitfähige Kugel oder einen Quecksilbertropfen enthalten. Solche Gerätschaften sind z.B. aus der US 3,927,286 und US 4,434,337 bekannt.

Aus der US 5,410,113 A ist ein Bewegungssensor bekannt, welcher mehrere plattenförmige Schichten, auf denen Einzelsensoren angeordnet sind, umfasst. Die Deckel- und die Bodenplatte weisen je eine sensorische Fläche auf, die über Leiterbahnen mit Anschlusskontakten verbunden sind. Zwischen der Decken- und der Bodenplatte ist eine Kammerplatte angeordnet, welche eine Aussparung aufweist. Die sensorischen Flächen der Deckelplatte und der Bodenplatte sind passgenau über den Öffnungen der Aussparung der Kammerplatte angeordnet. Dadurch entsteht eine Hohlkammer, deren Innenflächen elektrisch leitend sind. In der Hohlkammer ist eine elektrisch leitende Kugel angeordnet.

Aus der EP 1 939 911 ist ferner ein Vibrationssensor bekannt, bei welchem in ähnlicher Weise wie bei der US 5,410,113 ein Bewegungssensor aus mehreren Platten mit Deckel, Kammer- und Bodenplatte aufgebaut ist. In der durch die Schichtung der Platten gebildeten Hohlkammer befindet sich eine Kugel, wobei die Hohlkammer an ihren Innenflächen elektrisch leitend ist.

Nachteilig bei den beschriebenen Systemen ist, dass bei Verwendung mehrerer Einzelsensoren eine Vielzahl von Kontaktsäulen entstehen. Dies hat erhebliche produktionstechnische und kostenmäßige Nachteile. Weiterhin ist nachteilig, dass bei den beschriebenen Sensoren ein schneller und paralleler Funktionstest der Einzelsensoren nicht möglich ist.

Aus der DE 10158416 C1 und der WO 002008071289 A1 sind Bewegungssensoren in Plattenbauweise bekannt, die infolge einer mechanischen Anregung mit einer Widerstandsänderung an den äußeren Anschlüssen reagieren. Der in der DE 10158416 C1 beschriebene Bewegungssensor ist aus drei Platten aufgebaut. Eine Boden- und Deckplatte schließen eine Kammerplatte ein, welche mittig eine Bohrung aufweist. Hierdurch entsteht ein Hohlraum, in welchem eine Kugel angeordnet ist. Der Deckel kann ebenso wie der Boden über eine innere sensorische Fläche, einen Deckelkontaktpad, verfügen. Die betreffende Aufbautechnik erlaubt es nicht, die Lage, in der sich der Schalter mit dem Gravitationsfeld befindet zu detektieren.

In der DE 10158416 C1 wird alternativ ein Aufbau beschrieben, bei dem der Sensor über drei sensorische Flächen verfügt. Bei dieser Gestaltung sind Deckel- und Bodenkontaktpad parallel zum äußeren Kontaktpad geführt. Somit ist nur eine von der Lage unabhängige Bewegungsdetektion möglich, und zwar unabhängig davon, ob der Sensor mit dem Deckel oder mit dem Boden zur Erde neigt. Es kann demgemäß nicht unterschieden werden, ob die Widerstandsänderung des Sensors infolge des Kontakts zwischen Kugel, Hohlraum und Deckel oder zwischen Kugel, Hohlraum und Bodenseite hervorgerufen wird.

Der Sensor gemäß der DE 10158416 C1 reagiert äußerst empfindlich auf geringe Beschleunigungen und ändert seinen Status bei den kleinsten Erschütterungen. Bei einer Vielzahl von Anwendungen ist jedoch ein trägeres Sensorverhalten erforderlich. Dies gilt insbesondere in den Fällen, in denen elektronische Geräte erst dann aktiviert werden sollen, wenn sie stark bewegt werden. In vielen Fällen soll auch vermieden werden, dass bereits bei einer leichten Vibration innerhalb eines Gebäudes, beispielsweise ausgelöst durch einen vorbeifahrenden LKW, Geräte, die sich im Sparstrommodus befinden, aufgrund des Sensorimpulses unnötig aktiviert und damit eine erhöhte Stromaufnahme haben.

Nachteilig bei der DE 10158416 C1 und auch bei der WO 00200807128789 A1 ist auch, dass in der sensorischen Bodenfläche durch einen Bohrprozess und anschließende Herstellung einer elektrisch leitfähigen Hülse durch galvanische Prozesstechnologien eine Vertiefung geschaffen wird. Hierdurch entsteht in der metallischen Schicht am Bohrrand ein Grat, wessen Reduzierung nur durch aufwändige mechanische Bearbeitungsschritte wie Bürsten, Schleifen oder Leppen möglich ist. Infolge des Grates kann sich eine überhöhte Stelle um die Vertiefung ergeben, deren Eigenschaften nachteilig sind. Denn infolge der hohlen Wand wird die Kugel nicht oder nicht in reproduzierbarer Weise in die gewünschte Ruhelage gelangen. In der WO 002008071289 A1 ist eine stabile Ruhelage auch nicht erwünscht. Die Vorrichtung ist nämlich vielmehr darauf ausgelegt, eine möglichst hohe Sensitivität des Sensors zu realisieren. Es ist also nicht das Ziel dieser Erfindung, eine erhöhte und einstellbare Ansprechschwelle und eine definierte Ruhelage herzustellen.

Aufgabe der vorliegenden Erfindung ist es demgemäß, einen Bewegungssensor zur Verfügung zu stellen, welcher die beschriebenen Nachteile nicht mehr aufweist. Ziel der Erfindung ist es u.a., einen Bewegungssensor zur Verfügung zu stellen, bei dem die Ansprechschwelle der Empfindlichkeit von Mikro-, Bewegungs- und Lagersensoren in großen Bereichen eingestellt und insbesondere erhöht werden kann. Zum anderen soll erreicht werden, dass die Kugel in dem Sensor in einer definierten Ruheposition liegt.

Die erfindungsgemäße Aufgabe wird durch einen Bewegungssensor umfassend mehrere plattenförmige Schichten, auf denen Einzelsensoren angeordnet sind und die derart ausgestaltet sind,
- dass eine plattenförmige Schicht als Deckel und eine weitere Schicht als Bodenplatte ausgestaltet ist
- dass die Deckel- und Bodenplatte Eckpunkte aufweisen, an denen Anschlusspunkte angeordnet sind
- dass die Deckelplatte und die Bodenplatte je eine sensorische Fläche aufweisen, die über Leiterbahnen mit den Anschlusskontakten verbunden sind
- dass zwischen der Deckelplatte und der Bodenplatte wenigstens eine weitere plattenförmige Schicht angeordnet ist, welche als Kammerplatte ausgestaltet ist, die eine durchgehende vorzugsweise zylindrische Aussparung aufweist,
- dass die Kammerplatte Eckpunkte aufweist, in denen Anschlusspunkte angeordnet sind
- dass die sensorischen Flächen der Deckelplatte und der Bodenplatte passgenau über der Aussparung der Kammerplatte angeordnet sind, so dass eine geschlossene Hohlkammer hergestellt wird, deren Innenflächen mit den in deren Ecken angeordneten Anschlusspunkten elektrisch leitend über Leiterbahnen verbunden sind
- dass in der Hohlkammer eine elektrisch leitende Kugel angeordnet ist
- dass die Anschlusskontakte als durch alle plattenförmigen Schichten geführte Kontaktsäulen ausgestaltet sind
- dass die Deckelplatte eine Leiterbahn aufweist, die über die Kontaktsäule mit der Bodenplatte verbunden ist, ohne dass eine elektrisch leitende Verbindung zur Kontaktfläche der Bodenplatte entsteht und
- dass die Deckelplatte, Bodenplatte sowie die Innenflächen der Hohlraums der Kammerplatte elektrisch voneinander isoliert sind, vorzugsweise durch eine dünne isolierende Schicht.

Grundsätzlich ist die Zahl der plattenförmigen Schichten je nach Anwendungsbereich wählbar. Erfindungsgemäß bevorzugt wird jedoch ein Aufbau aus drei Platten, d.h. aus Deckel-, Kammer- und Bodenplatte. Die Größe der einzelnen Platten kann stark variieren. Sehr kleine Formate von ca. 40x40 mm² bis zu großen Formaten von 1000 x 1000 mm² sind aufbaubar, vorzugsweise sind die Platten aber 300 x 300 mm² groß. Auf diesen Platten befindet sich eine Vielzahl von Einzelsensoren, die in einer Matrix regelmäßig angeordnet sind. Ein Einzelsensor ist vorzugsweise zwischen 1 mm² und 20 mm² groß, besonders bevorzugt 7 mm² groß.

Bei dem erfindungsgemäß bevorzugten Ausbau aus drei Platten umfasst ein Einzelsensor eine Bodenplatte, eine Kammerplatte und eine Deckelplatte. Die Platten sind vorzugsweise eckig, besonders bevorzugt viereckig, höchst bevorzugt rechteckig oder quadratisch ausgestaltet. Die Längen und Breiten der Platten sind vorzugsweise identisch oder annähernd identisch, deren Höhen können jedoch verschieden sein.

Die Bodenplatte ist mit elektrischen Anschlussflächen versehen, mit denen der Einzelsensor in einer geeigneten elektrischen Verbindungstechnik (z.B. Löten, Kleben) mit dem Schaltungsträger (z.B. die Steuerplatine eines Gerätes) elektrisch dauerhaft verbunden werden kann. Die Anschlussflächen, z.B. die Lötanschlusspunkte befinden sich auf der einen Seite der Bodenplatte, d.h. deren Unterseite, die von außen zugänglich sein muss.

Auf der anderen Seite der Bodenplatte, d.h. deren Oberseite, ist eine elektrische Kontaktfläche mittig angeordnet. Sie dient der Realisierung der sensorischen Funktionalität in dem mit der Kammerplatte und der Deckelplatte gebildeten Hohlraum. Im fertig gebauten Einzelsensor liegt diese Kontaktplatte innen und ist hermetisch von der Umgebung abgeschirmt. Die Kontaktfläche in der Bodenfläche ist über eine Leiterbahn mit einem Lötanschlusspunkt (sogenanntes Lötpad) auf der Unterseite der Bodenplatte verbunden.

Die mittlere Platte, die sogenannte Kammerplatte, verfügt über eine Aussparung zur Herstellung des Hohlraums, die vorzugsweise annähernd zylindrisch bzw. zylindrisch ausgestaltet ist. Es sind grundsätzlich auch andere geometrische Formen denkbar. Diese müssen aber so gestaltet sein, dass eine Herstellung eines elektrischen Kontakts zwischen Hohlkammer und Kugel möglich ist. Grundsätzlich sind beliebige Aussparungen denkbar. Ebenso können diese mit allen dem Fachmann geläufigen Verfahren hergestellt werden. Z.B. kann die Kammerplatte durch Fräsen, Bohren, Stanzen oder im Spritzgussverfahren hergestellt werden. Wesentlich ist in jedem Fall, dass die Aussparung - im Folgenden auch als Bohrung bezeichnet - zur Deckel- und Bodenplattenseite hin jeweils offen ist. Mithin bildet die Aussparung bzw. die Bohrung einen durchgehenden Durchbruch in der Kammerplatte, welche mithin vorzugsweise als kreisrundes Loch ausgestaltet ist.

Die Bohrung ist derart angeordnet, dass sie passgenau über der Kontaktfläche der Bodenplatte liegt. Die Kontaktfläche der Bodenplatte ist vorzugsweise demgemäß kreisrund ausgestaltet, damit die Kontaktflächen passgenau aneinander liegen. Die Bohrung der Kammerplatte ist demgemäß in dieser vorzugsweise mittig positioniert. Die Wandung der Bohrung ist elektrisch leitfähig. Beispielsweise kann dies durch eine galvanisch aufgebrachte Metallschicht erreicht werden. Jedoch sind alle anderen dem Fachmann bekannten Methoden zur Herstellung der Leitfähigkeit ebenfalls geeignet. Die Wandung der Bohrung stellt die zweite Kontaktfläche dar und bildet im fertig hergestellten Zustand des Einzelsensors die Innenfläche des Hohlraums, in welchem die Kugel aufgenommen wird.

Die elektrisch leitende Kontaktfläche der Bohrung ist mit wenigstens einer vorzugsweise ein oder zwei elektrischen Leiterbahnen versehen, die an die Außenkante des plattenförmigen Einzelsensors geführt sind. Vorzugsweise werden die Leiterbahnen an ein oder zwei Eckpunkte der Kammerplatte geführt. An dem Eckpunkt weist die Kammerplatte eine vorzugsweise kreisförmig ausgebildete Anschlusskontakte auf. Die Kontaktfläche ist elektrisch an die äußere Anschlussfläche (z.B. Lötanschlusspunkt bzw. Lötpad) der Bodenplatte angeschlossen.

Die obere Platte, die Deckelplatte verfügt auf ihrer der Kammerplatte zugewandten Ebene über eine ebenfalls vorzugsweise kreisrunde Kontaktfläche. Diese Kontaktfläche wird in Anpassung an die Bohrung der Kammerplatte ausgestaltet. Sofern die Bohrung eine andere symmetrische Form hat, muss demgemäß hier eine Anpassung vollzogen werden. Die Kontaktfläche ist spiegelsymmetrisch zur Kontaktfläche des Bodens angeordnet. D.h. sie ist ebenfalls vorzugsweise mittig der Deckelplatte angeordnet. Ebenso wie die Kontaktfläche des Bodens verfügt auch die elektrisch leitfähige Kontaktfläche der Deckelplatte über einen Anschluss über eine Leiterbahn. Diese ist mit einer Ecke bzw. einem Eckpunkt der Deckelplatte verbunden. Dieser Eckpunkt ist ebenfalls vorzugsweise mit insbesondere als Halbkreis bzw. zylinderförmig ausgestalteten Anschlusskontakten ausgestattet. Diese werden elektrisch mit der vierten bzw. dem dritten Anschlusskontakt auf der Bodenplatte kontaktiert.

Die erfindungsgemäß vorzugsweise eingesetzten drei Platten (Bodenplatte, Kammerplatte, Deckelplatte) werden derart laminiert, dass die Kontaktflächen der Boden- und der Deckelplatte konzentrisch übereinander und über den Öffnungen der Bohrung der Kammerplatte positioniert sind. Auf diese Art entsteht ein Hohlraum, welcher durch die Kontaktflächen der Boden- und Deckelplatte sowie die Innenfläche (Innenwand) der Bohrung umschlossen ist. In dem Hohlraum ist eine Kugel frei beweglich angeordnet. Die Innenflächen, insbesondere die Bodenflächen sind als glatte Ebenen ausgestaltet und weisen keinerlei Erhöhungen auf und sind völlig plan ausgestaltet, so dass die Kugel ungehindert frei beweglich ist. Der durch das beschriebene Zusammensetzen von Bodenkammer- und Deckelplatte entstandene Hohlraum kann beliebig geometrische Formen haben. Bevorzugt ist eine zylindrische Ausgestaltung.

Die elektrischen Anschlüsse zwischen den Leiterbahnen und den dazugehörigen Lötanschlussflächen (Lötanschlusspunkte, Lötpads) auf der Außenseite der Bodenplatte werden vorzugsweise erst nach der Laminierung der Boden-, Kammer- und Deckelplatte eingebracht, um die Herstellung der Sensoren erforderliche Anzahl der Bohrungen zu reduzieren und so die Herstellungskosten und die Herstellungszeit zu minimieren. Die Herstellung der Leiterbahn erfolgt vorzugsweise in einem in der Leiterplattenbranche üblichen galvanischen Prozess. Aber auch andere Verfahren zur Metallisierung sind denkbar, z.B. Aufdampfen von Metall, Sputtern.

Eine Lageerkennung mit einem Bewegungssensor wird möglich, wenn die inneren sensorischen Kontaktflächen des Bodens sowie des Deckels je einen elektrischen Anschlusskontakt besitzen, der an den Außenseiten, vorzugsweise zu den Eckpunkten eines einzelnen Sensors angeordnet ist und dort in eine nach außen liegende Anschlussfläche auf der Bodenplatte mündet. Jede sensorische Kontaktfläche ist genau an einen "äußere" Anschlusskontakt angebunden. Die Anschlusskontakte sind als durch alle plattenförmigen Schichten geführte Kontaktsäule ausgebildet, deren Innenflächen elektrisch leitend sind. Da die Platten vorzugsweise viereckig, besonders bevorzugt rechteckig oder quadratisch sind, wird erfindungsgemäß die Anordnung der Kontaktsäulen an den Ecken bevorzugt.

Die sensorischen Kontaktflächen der Bodenplatte haben derart ausgestaltete Leiterbahnen, dass über die Kontaktsäule die sensorischen Kontaktflächen der Deckelplatte nichtleitend mit den Anschlusskontakten (Lötanschlusspunkte) der Bodenplatte verbunden sind. D.h., die Kontaktfläche der Bodenplatte hat eine von der Kontaktfläche der Deckelplatte separat ausgeführte Leiterbahn, die auch separat zu den außenliegenden Lötanschlusspunkten (elektrische Außenpads) auf der Unterseite der Bodenplatte führen. Dies kann z.B. dadurch erreicht werden, dass die Leiterbahnen der Bodenplatte eine Verbindung zu einer Ecke und die Leiterbahn der Deckelplatte eine Verbindung zu einer anderen Ecke der jeweiligen Platte herstellen. Damit bildet ein Eckpunkt für die Leiterverbindung der Kontaktfläche zum Eckpunkt der Bodenplatte, während der zweite Lötanschlusspunktpunkt der Bodenplatte die elektrische Verbindung der Leiterbahnen mit der Kontaktfläche der Deckelplatte herstellt. Im Ergebnis sind somit die Bodenplatte und die Deckelplatte nicht elektrisch leitend miteinander verbunden.

Für eine Lageerkennung, die auch im statischen Zustand zuverlässig arbeitet, ist es darüber hinaus vorteilhaft, diesen Sensor um eine elektronische Speichereinheit zu erweitern, in dem die letzte Lage des Sensors im Gravitationsfeld zwischengespeichert wird. Selbst, wenn die Kugel nach einem Lagewechsel zur Ruhe kommt und der Widerstand an den äußeren Kontaktflächen hochohmig werden sollte (sei es, dass die Kugel nicht gleichzeitig beide sensorischen Flächen berührt oder zwar beide sensorischen Flächen berührt aber infolge zu geringer Kräfte keinen dauerhaften niederohmschen Zustand aufrecht erhalten kann), kann dem Benutzer die Information über die letzte Lage des Gerätes zuverlässig zur Verfügung gestellt werden.

Für eine optimale Produktion der Bewegungssensoren ist es vorteilhaft, die Einzelsensoren mit einer zweidimensionalen Matrixanordnung aneinander zu reihen. Die vorzugsweise viereckig ausgestalteten Einzelsensoren lassen sich demgemäß als Untermatrizen in einer größeren Matrixanordnung verwenden. Erfindungsgemäß werden vorzugsweise vier Einzelsensoren zusammengefasst. Diese sind als Untermatrizen in einer übergeordneten Matrixanordnung regelmäßig verbunden. Durch die Anordnung der Kontaktsäule an den Eckpunkten ergeben sich die erfindungsgemäßen Vorteile. Die Kontaktsäule hat nämlich an den Eckpunkten eine viertelkreisförmige Ausgestaltung. Durch die Zusammenfügung mehrerer Matrixelemente entsteht an den Eckpunkten eine durchgehende Säule in Form einer vorzugsweise senkrechten Bohrung. Mithin entsteht eine durch alle drei Platten gehende vertikale Kontaktsäule, in welcher die Leiterbahnen der angrenzenden Matrixelemente elektrisch zusammengeführt werden können. Bei der Ausgestaltung in Form von vier Untermatrizen befindet sich die vertikale Kontaktsäule mithin im Zentrum der übergeordneten Matrix. Hierbei kann in der Kontaktsäule jeweils eine Leiterbahn der sensorischen Kontaktfläche der Bodenplatte des einen Matrixelementes, der sensorischen Kontaktfläche der Deckelplatte des anderen Matrixelementes und eine oder zwei Leiterbahnen der Kammerplatte eines oder zweier weitere angrenzender Matrixelemente zusammengeführt werden.

Die äußeren Anschlussflächen befinden sich vorzugsweise jeweils im Zentrum der aus parallelen Einzelsensoren zusammengesetzten Matrix. Die sensorischen Kontaktflächen der vier Einzelsensoren werden über Leiterbahnen vorzugsweise elektrisch genau in einer Bohrung im Zentrum der zusammengesetzten Matrix zusammengeführt. Die dort zusammengeführten Leiterbahnen stammen alle von verschiedenen Einzelsensoren, so dass jeweils genau ein Anschluss im Inneren der Matrix verbleibt.

Bei dem verwendeten Plattenmaterial handelt es sich vorzugsweise um handelsübliches preiswertes Leiterplattenmaterial. Es kann aber auch jedes beliebige andere Material verwendet werden.

Der aus den Platten aufgebaute Bewegungssensor verfügt vorzugsweise über vier sensorisch aktive Kontaktflächen, die in laminierten Plattenverbund alle hermetisch von der Außenumgebung abgeschirmt sind. Bei den Kontaktflächen handelt es sich um die Oberfläche der in die Hohlkammer eingebrachten Kugel, die Oberfläche (die Innenwände) der Bohrung selbst, die Kontaktfläche der Bodenplatte und die Kontaktfläche an der Deckelplatte. Für die Detektion von Bewegungen wird die Hohlraumoberfläche, die Kugeloberfläche und entweder die Kontaktflächen des Bodens oder des Deckels benötigt. Sofern die Kugel gleichzeitig die Innenwand der Kammer und die Kontaktfläche des Bodens berührt, ist der Widerstand zwischen dem an der Innenwandung des Hohlraums angeschlossenen Lötanschluss und dem an der Kontaktfläche des Bodens angeschlossenen Lötanschluss niedrig, meist unter 100 Ohm oft aber auch unter 1 Ohm. Bewegt sich die Kugel in der Kammer infolge einer mechanischen Anregung, werden die beiden sensorischen Kontaktflächen der Kammerplatte und der Bodenplatte durch die Kugeloberfläche nicht mehr überbrückt. Der Widerstand zwischen dem an der Hohlraumwandung angeschlossenen Lötanschluss und an dem an der Kontaktfläche des Bodens angeordneten Lötanschluss ist hoch. Meist liegen die Werte über 10 Megaohm, oft aber auch deutlich über 30 Megaohm.

Bei der besonders bevorzugten miniaturisierten Aufbauvariante mit einer Grundfläche der Platten von 7 qmm oder kleiner ist die Kugel i.A. sehr klein und hat einen Durchmesser unter 0,3 bis 2 mm, vorzugsweise 0,5 bis 1 mm ganz besonders bevorzugt unter 1 mm. Damit sind die Auflagekräfte der Kugel sehr gering und es können Zustände eintreten, bei denen die Kugel sowohl die Bohrungswand als auch das sensorische Pad des Bodens (oder des Deckels) gleichzeitig berührt, und dennoch der Widerstand der Anordnung sehr hoch ist (>10 Megaohm). Allein die Gravitationskräfte sind in diesem Fall nicht immer ausreichend, um einen niedrigen Übergangswiderstand an den äußeren Anschlusspads zu garantieren. Hierfür kann eine zusätzliche Kontaktkraft erforderlich sein, die beispielsweise infolge der Beschleunigung (Abbremsen) der Kugel hervorgerufen wird.

Durch die Bewegung der Kugel wird das System aktiviert, so dass und die Stromaufnahme steigt an. Im Falle von Vibrationen, z.B. ausgelöst durch einen vorbeifahrenden LKW, kann das Gerät, das sich im tiefsten Stromsparmodus befindet, aufgrund des Sensorimpulses ggf. ungewollt aktiviert werden und somit eine erhöhte Stromaufnahme haben.

In einer Variante der Erfindung kann daher die Ansprechschwelle der Empfindlichkeit von Mikro- Bewegungs- und Lagesensoren in Plattenbauweise in großen Bereichen eingestellt und insbesondere erhöht werden. Außerdem kann eine definierte Ruheposition der Kugel und somit eine Schalterposition des Sensors in Vorzugsmontagelage vorgegeben werden.

Dieses Ziel wird dadurch erreicht, dass die innere Oberfläche der Bodenplatte der Hohlkammer modifiziert wird. Diese wird derart ausgestaltet, dass eine Vertiefung, z.B. ein kreisrundes Loch, in den metallischen Teil des Bodenkontakts der Bodenplatte eingebracht wird. In dieser Vertiefung kann die Kugel eine stabile Ruhelage annehmen. Vorzugsweise ist die Vertiefung nur wenige µm tief. Vorzugsweise beträgt die Tiefe 10 µ bis 100 µ, besonders bevorzugt 20 µ bis maximal 100 µ. Durch die Vertiefung wird die freie Bewegung derart behindert, dass ein leichtes Antippen des Sensors nicht mehr ausreichend ist, die Kugel aus der Ruhelageposition heraus zu bewegen und somit eine Signaländerung an den äußeren Messstellen des Sensors zu bewirken. Die Empfindlichkeit des Sensors kann mit dieser einfachen Variante um einen Faktor 10 reduziert werden. Ist die Vertiefung zudem so angeordnet, dass sie. in der Mitte der Bodenkontakte positioniert ist, ist es bei entsprechender zentrischer Anordnung der Hohlkammer um den Kontaktpad herum und bei geeigneten Kugelabmessungen zudem möglich, dass der Sensor in der Ruhelage hochohmig ist. Der Stromverbrauch in der Ruhelage wird auf ein Minimum reduziert. Durch eine entsprechende Verschiebung der Achse der Vertiefung zur Kammer kann erreicht werden, dass der Schalter in der Ruhelage geschlossen ist.

Bevorzugt ist, dass die Vertiefung in der Oberfläche der Bodenplatte nicht durch Bohren oder Fräsen hergestellt wird. Vielmehr wird dies vorzugsweise durch Ätzen erreicht. Die Modifikation des Ätzresists kann ohne zusätzliche Fertigungsschritte bei der Herstellung der Bodenplatte erreicht werden. Durch diese Herstellungsart wird zugleich vermieden, dass sich infolge von Bohrprozessen ein Wall an Vertiefungsrand bildet. Die Vertiefung hat vielmehr die Form eines Trichters. D.h. die Fläche der Bodenplatte weist keine Erhöhungen, sondern nur eine Vertiefung auf. M.a.w. die Bodenfläche ist bis auf die Vertiefung völlig plan ausgelegt. Damit werden die Nachteile vermieden, welche bei einer Lage der Kugel auf einem Bohrgrat am Vertiefungsrand entstehen können. Denn hier kann die Kugel nämlich nicht stabil liegen. Hingegen ist es bei einem Bohrrand an der Vertiefung auch möglich, dass die Kugel zwischen Wand und Wandung eine Ruhelage einnimmt, welche nicht erwünscht ist. Durch die erfindungsgemäße Gestaltung ohne Bohrgrat wird dies vermieden und die Kugel kommt alleine die der Vertiefung in die Ruhelage.

Die Anordnung der Einzelsensoren in einer Matrix hat produktionstechnische Vorteile und damit eine kostengünstige Herstellung zur Folge. Die erfindungsgemäße Aufbauform erlaubt insbesondere eine preiswerte Herstellung von Bewegungssensoren in großer Zahl, die neben der Bewegung auch die Lage erkennen, in der sich der Sensor in einem Gravitationsfeld befindet. Durch die spezielle Anordnung der Einzelsensoren in der Matrix mit gemeinsamen Kontaktsäulen kann die Anzahl der Anschlusskontakte deutlich reduziert werden. Sofern die Einzelsensoren in Leiterplattentechnik hergestellt und die Innenflächen der Kontaktsäulen aus galvanisierten Durchkontaktierungen bestehen, kann die Anzahl der für die Herstellung erforderlichen Bohrlöcher durch Mitbenutzung einer Bohrung durch die benachbarten Einzelsensoren deutlich reduziert werden und somit die Herstellzeit und die Kosten signifikant gesenkt werden. Ferner erlaubt die spezielle Anordnung der Einzelsensoren in einer regelmäßigen Matrix den schnellen und parallelen Funktionstest der Einzelsensoren.

Die Bewegungssensoren können auch zur Bewegungsdeduktion beliebiger technischer Vorrichtungen verwendet werden. Insbesondere die Bewegung von Bügeleisen, bei denen die Abhängigkeit der Lage und des Bewegungszustandes der Steuerung der Temperatur der Bügelsohle dienen soll, kann der Sensor verwendet werden.

Im Folgenden wird die Erfindung unter Bezugnahme auf die Figuren näher beschrieben.
Figur 1 zeigt die Darstellung einer Bodenplatte.
Figur 2 zeigt eine Kammer mit zentrischen Bohrungen.
Figur 3 stellt die Deckelplatte dar.
Figur 4 zeigt im Querschnitt einen Einzelsensor mit Bodenplatte, Kammerplatte und Deckelplatte.
Figur 5 zeigt die Anordnung der Platten vor dem Laminierungsschritt.
Figur 6 zeigt den Zusammenschluss von vier Matrixelementen.
Figur 7 zeigt ein Beispiel eines typischen Systemaufbaus mit einem Bewegungssensor.
Figur 8 zeigt die erfindungsgemäße Variante eines Sensors mit einer Vertiefung in der Bodenplatte.
Figur 9 zeigt eine Herstellungsvariante

Die einzelnen Bezugszeichen in den Figuren haben folgende Bedeutung:
- 2, 3, 4: Plattenförmige Schichten
- 5: Hohlraum
- 6: Kugel
- 7: Innenflächen des Hohlraums
- 8: Anschlusskontakt der Bodenplatte
- 8a, 8b: Anschlusskontakte der Kammerplatte
- 8c: Anschlusskontakte der Deckelplatte
- 9: Leiterbahnen der Bodenplatte
- 9a, 9b: Leiterbahnen der Kammerplatte
- 9c: Leiterbahnen der Deckelplatte
- 10, 11, 12, 13: Einzelsensoren
- 14, 15,: Kontaktflächen
- 16: Installationsringe
- 17: Lötanschlusspunkte
- 18: Bewegungssensor
- 19: Schalter
- 20: Auswerteelektronik
- 20a: Eingang zur Auswerteelektronik
- 21: Bodenpad mit kreisförmiger Vertiefung
- 22: Äußere Messstelle
- 23: Leiterbahn
- 24: Kontakt in der Hohlkammer
- 25: Ätzresist vor dem Ätzen
- 26: Vollflächige Kupferauflage
- 27: Kupfer nach dem Ätzen mit Ätzresistschicht
- 28: Ätzresist entfernt

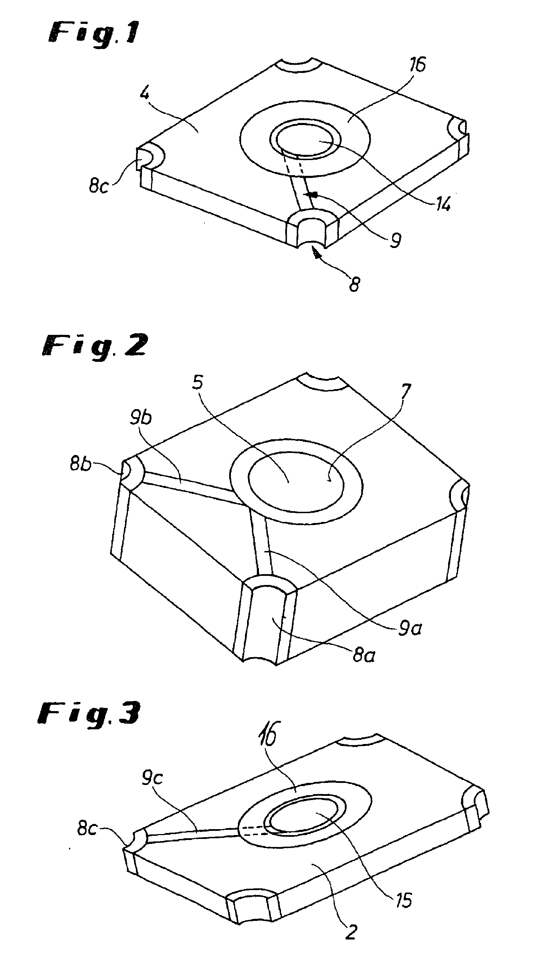

Bei dem in Figur 1 dargestellten Element handelt es sich um die Bodenplatte 4. Mittig ist die Kontaktfläche 14 angeordnet. Von dieser führt über die Leiterbahnen 9 eine elektrische Verbindung zu einem Anschlusskontakt 8. Dieser ist an einem Eckpunkt der Bodenplatte angeordnet und nahezu kreisförmig ausgestaltet.

In Figur 2 ist die Kammerplatte 3 dargestellt. Mittig ist eine Bohrung zur Herstellung des Hohlraums 5 zu erkennen. Die Innenwände 7 dieser Bohrung bilden die Innenflächen die elektrisch leitenden Innenflächen des Hohlraums 5. Von den elektrisch leitfähigen Innenflächen 7 führen Leiterbahnen (im Beispiel 2 Leiterbahnen) zu zwei Anschlusskontakten 8. Es handelt sich um elektrisch leitfähige Verbindungen zum Anschlusskontakt der Bodenplatte 4. Die Leiterbahn 9a ist demgemäß entsprechend der Leiterbahn 9 der Bodenplatte 4 ausgerichtet.

In Figur 3 ist die Deckelplatte 2 dargestellt. Diese ist spiegelsymmetrisch zur Kontaktfläche 15 der Bodenplatte 4 ausgerichtet. Mittig enthält sie eine Kontaktfläche 15, welche passgenau zur Bohrung der Kammerplatte 3 ausgerichtet ist. Hierdurch kann beim Aufsetzen der Deckelplatte 2 die Hohlkammer 5 hergestellt werden, wobei die Kontaktflächen (Innenflächen) der Bodenplatte 4, der Hohlkammer 5 und der Deckelplatte 2 leitfähig sind. Die Kontaktfläche 15 ist wiederum mit einem über eine Leiterbahn 9c mit einem Anschlusskontakt 8c verbunden. Dieser ist kreisförmig bzw. zylinderförmig ausgestaltet. Die zylinderförmige Innenfläche des Anschlusskontakts 8c enthält eine elektrische Verbindung zu einem anderen Anschlusskontakt der Bodenplatte 4 als die Leiterbahn 9 der Bodenplatte 4. Andererseits stimmt die elektrische Verbindung wiederum mit der zweiten elektrischen Verbindung (Leiterbahn 9b) zwischen Innenfläche 7 des Hohlraums 5 der Kammerplatte 3 und dem anderen Anschlusskontakt 8b überein. Auf diese Art wird eine Verbindung zwischen Kammerplatte 3 und Deckelplatte 2 hergestellt. Auf der anderen Seite ist wiederum die Kontaktfläche 14 der Kammerplatte 3 mit der Kontaktfläche 15 der Bodenplatte 4 über die Leiterbahn 9a elektrisch verbunden.

Die Kontaktflächen 14 und 15 von Boden 4- und Deckelplatte 2 sind mit Installationsringen 16 versehen. Hierdurch ist die passgenaue Anordnung über der Bohrung 5 der Kammerplatte 3 gewährleistet. Zugleich wird eine hermetische Abschirmung gegen die Umgebung erreicht.

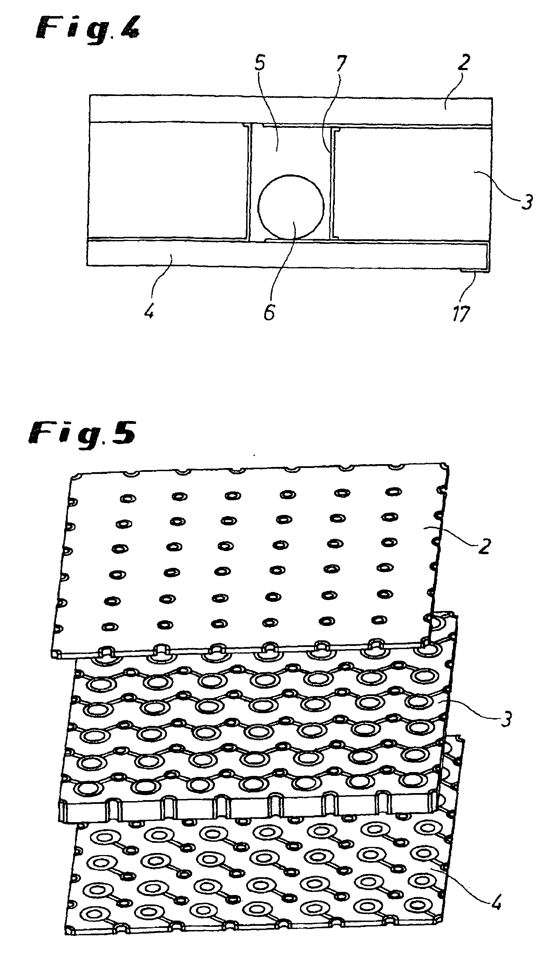

In Figur 4 ist schließlich der Schnitt durch einen Einzelsensor mit Bodenplatte und Kammerplatte und Deckelplatte zu erkennen. Die Kammerplatte 3 wird zwischen Bodenplatte 4 und Deckelplatte 2 einlaminiert. Hierdurch entsteht der Hohlraum 5 mit seinen leitfähigen Innenwänden 7 und der Kugel 6. Die Leiterbahnen 9 sind auf dem zur Kammerplatte hinweisenden Seite von Deckelplatte 2 und Bodenplatte 4 nach außen geführt.

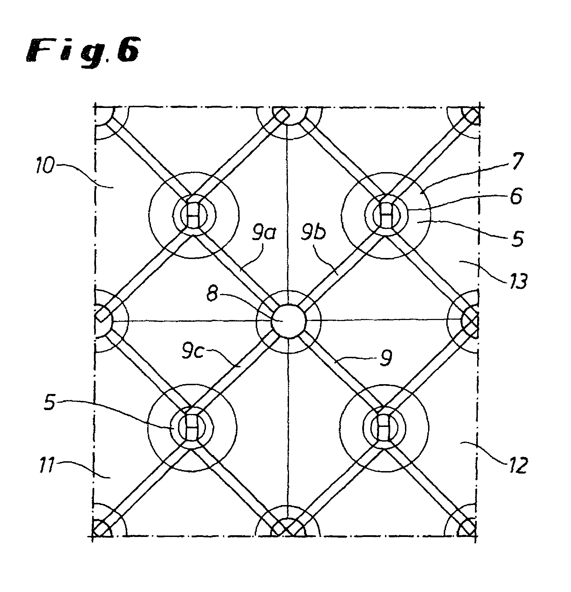

In Figur 5 ist die Anordnung der Einzelsensoren dargestellt. Hierbei sind die Boden, Kammer und Deckelplatte 4, 3, 2 vor dem Laminierungsschritt zu erkennen. In Figur 6 ist der Zusammenschluss von vier Einzelsensoren 10, 11, 12, 13 zu erkennen. Jeder Einzelsensor enthält mittig den Hohlraum 5 mit der Kugel 6 und den Kontaktflächen 7. In dem Einzelsensor 10 ist die Leiterbahn 9a der Kammerplatte 3 mit der zentralen Kontaktsäule 8 verbunden. In dem Einzelsensor 13 ist die Leiterbahn 9b ebenfalls mit der zentralen Kontaktsäule 8 verbunden. In dem Einzelsensor 11 ist die Leiterbahn 9c der Deckelplatte 2 wiederum mit der zentralen Kontaktfläche 8 verbunden. Ebenso ist über die Leiterbahn 9 der Bodenplatte 4 des Sensors 12 eine Verbindung von der Kontaktfläche 15 zur zentralen Anschlussfläche 8 hergestellt. Die zusammengeführten Leiterbahnen stammen alle von verschiedenen Einzelsensoren. Infolge dieser Gestaltung mit der regelmäßigen Anordnung in einer Hauptmatrix lässt sich kostengünstig ein Bewegungssensor in Plattenbauweise herstellen.

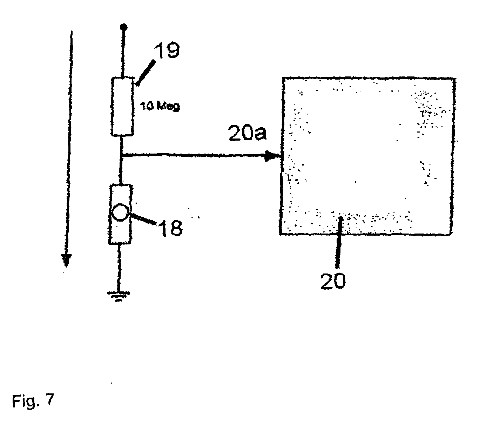

Figur 7 zeigt einen typischen Systemaufbau, ein Spannungswechsel am Eingang 20a der Auswerteelektronik 20 infolge der Bewegung der Kugel 6 im Hohlraum des Bewegungssensors 18.

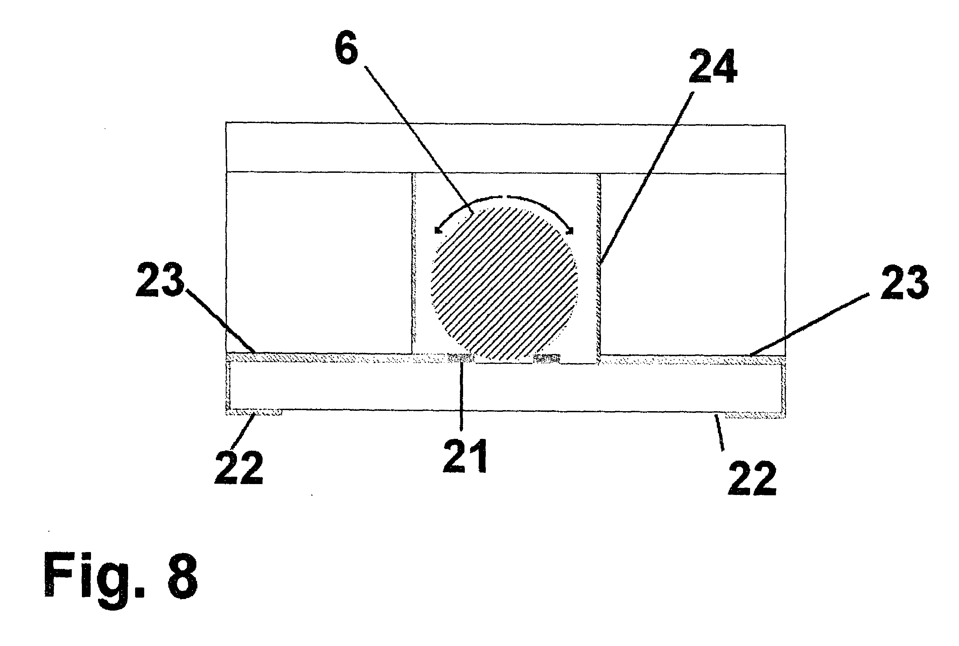

In Figur 8 ist die erfindungsgemäße Variante dargestellt, mit welcher das Problem der Einstellung der Empfindlichkeit der Ansprechschwelle gelöst werden kann. Zu erkennen ist die Kugel 6 in der Hohlkammer 5. An der senkrechten Wand 24 sind Kontakte angeordnet. Ebenso sind Kontakte an der Innenfläche der Bodenplatte vorhanden. Von der Bodenplatte aus führen die Leiterbahnen 23 zu den äußeren Messstellen 22. In die Kontaktfläche der Bodenplatte in der Hohlkammer 5 ist eine Vertiefung 21 eingelassen. In der betreffenden Vertiefung kommt die Kugel 6 in Ruhelage. Durch die Vertiefung 21 wird die freie Bewegung der Kugel derart behindert, dass ein leichtes Antippen des Sensors nicht mehr ausreichend ist, die Kugel aus der Ruhelageposition heraus zu bewegen. Die Empfindlichkeit des Sensors kann demgemäß mit dieser Variante reduziert werden.

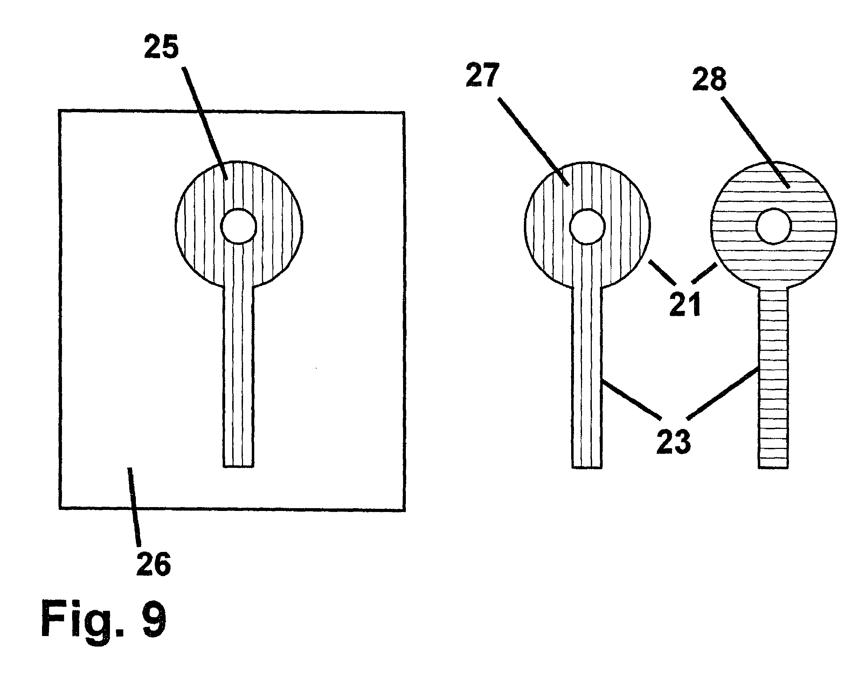

In der Figur 9 ist eine besonders einfache Herstellungsvariante zur Reduzierung der Sensorempfindlichkeit dargestellt. Die Vertiefung 21 wird bei der Herstellung der Leiterbahn 23 direkt mit hergestellt. Dies wird durch einen einfachen Ätzprozess erreicht. In der Figur 10 ist der Ätzresist 25 in der vollflächigen Kupferauflage 26 vor dem Ätzen zu erkennen. Die metallischen Bereiche, die nicht mit Ätzresist belegt sind, werden weggeätzt. Auf dem Kupfer liegt nach dem Ätzen noch der Ätzresist (mit Ziffer 27 bezeichnet), der anschließend entfernt wird. Es entsteht die modifizierte Leiterbahn mit den geänderten sensorischen Flächen 14 und 15. Die Leiterbahn entspricht den sensorischen Flächen (Kontaktflächen) 14 und 15 mit Leiterbahn, wobei nun die sensorischen Flächen 14 und 15 je eine Vertiefung aufweisen.

## Patentansprüche

1. Bewegungssensor umfassend mehrere plattenförmige Schichten, auf denen Einzelsensoren angeordnet sind und die derart ausgestaltet sind,
- dass eine plattenförmige Schicht als Deckelplatte (2) und eine Schicht als Bodenplatte (4) ausgestaltet ist,
- dass die Deckel- (2) und Bodenplatte (4) Eckpunkte aufweisen, in denen Anschlusskontakte (8, 8c) angeordnet sind,
- dass die Deckel- (2) und die Bodenplatte (4) je eine sensorische Fläche (14, 15) aufweisen, die über Leiterbahnen (9, 9c) mit den Anschlusskontakten (8, 8c) verbunden sind
- dass zwischen der Deckel- (2) und der Bodenplatte (4) wenigstens eine plattenförmige Schicht angeordnet ist, welche als Kammerplatte (3) ausgestaltet ist, die eine Aussparung aufweist, **dadurch gekennzeichnet,**
- **dass** die Kammerplatte (3) Eckpunkte aufweist, in denen Anschlusskontakte (8 a, 8b) angeordnet sind
- **dass** die sensorischen Flächen (14, 15) der Deckel- (2) und der Bodenplatte (4) passgenau über der Aussparung der Kammerplatte (3) angeordnet sind, so dass eine geschlossene Hohlkammer (5) hergestellt wird, deren Innenflächen (7)mit den in deren Eckpunkten angeordneten Anschlusskontakten (8a, 8b) über Leiterbahnen (9a, 9b) elektrisch leitend verbunden sind
- **dass** in der Hohlkammer (5) eine elektrisch leitende Kugel (6) angeordnet ist
- **dass** die Anschlusskontakte (8, 8a, 8b, 8c) als durch alle plattenförmigen Schichten (2, 3, 4) geführte Kontaktsäulen ausgestaltet sind und
- **dass** die Deckelplatte (4) eine Leiterbahn (9) aufweist, die über die Kontaktsäule (8) mit der Bodenplatte (4) verbunden ist, ohne dass eine elektrische Verbindung zur Kontaktfläche (14) der Bodenplatte (4) entsteht
- **dass** die Deckelplatte, Bodenplatte sowie die Innenflächen (7) des Hohlraums (5) der Kammerplatte elektrisch voneinander isoliert sind.

2. Bewegungssensor nach Anspruch 1 **dadurch gekennzeichnet, dass** die plattenförmigen Schichten (2, 3, 4) viereckig ausgestaltet sind.

3. Bewegungssensor nach einem der Ansprüche 1 oder 2 **dadurch gekennzeichnet, dass** die Leiterbahnen (9a, 9b) die Kammerplatte (3) elektrisch leitend die Innenwand (7) der Hohlkammer (5) mit den Anschlusskontakten (8a, 8b) verbindet.

4. Bewegungssensor nach Anspruch 2 oder 3 **dadurch gekennzeichnet, dass** die als Kontaktsäule ausgestalteten Anschlusskontakte (8) an den Eckpunkten der viereckig ausgestalteten plattenförmigen Schichten (2, 3, 4) angeordnet sind.

5. Bewegungssensor nach einem der vorgehenden Ansprüche **dadurch gekennzeichnet, dass** er mehrere Einzelsensoren (10, 11, 12, 13) umfasst, welche parallel derart angeordnet sind, deren Leiterbahnen (9) die Innenflächen (7) der Wände der Hohlkammern (5) mit einem einzigen zentralen Anschlusspunkt (8) elektrisch leitend verbindet.

6. Bewegungssensor nach Anspruch 5 **dadurch gekennzeichnet, dass** der zentrale Anschlusskontakt (8) aus den Eckpunkten der rechtecksförmigen Schichten (2, 3, 4) der parallel angeordneten Sensoren (10, 11, 12, 13) gebildet wird.

7. Bewegungssensor nach Anspruch 6 **dadurch gekennzeichnet, dass** er aus vier Einzelsensoren (10, 11, 12, 13) zusammengesetzt ist.

8. Bewegungssensor nach einem der vorhergehenden Ansprüche **dadurch gekennzeichnet, dass** die Einzelsensoren zwischen 1 und 20 qmm groß sind.

9. Bewegungssensor nach einem der vorhergehenden Ansprüche **dadurch gekennzeichnet, dass** der Durchmesser der Kugel zwischen 0,3 und 2 mm liegt.

10. Bewegungssensor nach einem der vorhergehenden Ansprüche **dadurch gekennzeichnet, dass** in die Innenfläche der Bodenplatte eine Vertiefung, aber keine Erhöhung aufweist.

11. Bewegungssensor nach Anspruch 10 **dadurch gekennzeichnet, dass** die Vertiefung 10 µm bis 100 µm tief ist.

## Claims

1. A movement sensor comprising a plurality of plate-type layers on which individual sensors are arranged and which are configured in such a way
- that one plate-type layer is configured as a cover plate (2) and one layer is configured as a base plate (4),
- that the cover plate (2) and base plate (4) have corner points in which connection contacts (8, 8c) are arranged,
- that the cover plate (2) and the base plate (4) each have a sensor-associated surface (14, 15), which are connected to the connection contacts (8, 8c) via conductor tracks (9, 9c),
- that at least one plate-type layer configured as a chamber plate (3) having a cutout is arranged between the cover plate (2) and the base plate (4), **characterized in**
- **that** the chamber plate (3) has corner points in which connection contacts (8a, 8b) are arranged,
- **that** the sensor-associated surfaces (14, 15) of the cover plate (2) and of the base plate (4) are arranged with register accuracy over the cutout of the chamber plate (3), such that a closed hollow chamber (5) is produced, the inner surfaces (7) of which are electrically conductively connected to the connection contacts (8a, 8b) arranged in the corner points thereof via conductor tracks (9a, 9b),
- **that** an electrically conductive ball (6) is arranged in the hollow chamber (5),
- **that** the connection contacts (8, 8a, 8b, 8c) are configured as contact columns led through all the plate-type layers (2, 3, 4), and
- **that** the cover plate (4) has a conductor track (9) connected to the base plate (4) via the contact column (8) without an electrical connection to the contact surface (14) of the base plate (4) arising,
- **that** the cover plate, base plate and the inner surfaces (7) of the cavity (5) of the chamber plate are electrically insulated from one another.

2. The movement sensor as claimed in claim 1, **characterized in that** the plate-type layers (2, 3, 4) are configured in a quadrilateral fashion.

3. The movement sensor as claimed in either of claims 1 or 2, **characterized in that** the conductor tracks (9a, 9b) the chamber plate (3) electrically conductively connects the inner wall (7) of the hollow chamber (5) to the connection contacts (8a, 8b).

4. The movement sensor as claimed in claim 2 or 3, **characterized in that** the connection contacts (8) configured as a contact column are arranged at the corner points of the plate-type layers (2, 3, 4) configured in a quadrilateral fashion.

5. The movement sensor as claimed in any of the preceding claims, **characterized in that** it comprises a plurality of individual sensors (10, 11, 12, 13) arranged parallel in such a way that the conductor tracks (9) thereof electrically conductively connects the inner surfaces (7) of the walls of the hollow chambers (5) to a single central connection point (8).

6. The movement sensor as claimed in claim 5, **characterized in that** the central connection contact (8) is formed from the corner points of the rectangular layers (2, 3, 4) of the sensors (10, 11, 12, 13) arranged parallel.

7. The movement sensor as claimed in claim 6, **characterized in that** it is composed of four individual sensors (10, 11, 12, 13).

8. The movement sensor as claimed in any of the preceding claims, **characterized in that** the individual sensors have a size of between 1 and 20 mm2.

9. The movement sensor as claimed in any of the preceding claims, **characterized in that** the diameter of the ball is between 0.3 and 2 mm.

10. The movement sensor as claimed in any of the preceding claims, **characterized in that** into the inner surface of the base plate has a depression, but no elevation.

11. The movement sensor as claimed in claim 10, **characterized in that** the depression has a depth of 10 µm to 100 µm.

## Revendications

1. Capteur de mouvement comprenant plusieurs couches en forme de plaque sur lesquelles sont disposés des capteurs individuels et qui sont configurées de telle sorte
- qu'une couche en forme de plaque soit configurée en tant que plaque de recouvrement (2) et qu'une couche soit configurée en tant que plaque de base (4),
- que la plaque de recouvrement (2) et la plaque de base (4) présentent des coins dans lesquels sont disposés des contacts de raccordement (8, 8c),
- que la plaque de recouvrement (2) et la plaque de base (4) présentent chacune une surface de détection (14, 15), lesquelles sont connectées par le biais de pistes conductrices (9, 9c) aux contacts de raccordement (8, 8c),
- qu'entre à plaque de recouvrement (2) et la plaque de base (4) soit disposée au moins une couche en forme de plaque qui est configurée en tant que plaque formant chambre (3) qui présente un évidement,
**caractérisé en ce que**
- la plaque formant chambre (3) présente des coins dans lesquels sont disposés des contacts de raccordement (8a, 8b),
- les surfaces de détection (14, 15) de la plaque de recouvrement (2) et de la plaque de base (4) sont disposées de manière ajustée précisément au-dessus de l'évidement de la plaque formant chambre (3), de telle sorte qu'une cavité fermée (5) soit formée, dont les surfaces internes (7) sont connectées de manière électriquement conductrice, par le biais de pistes conductrices (9a, 9b), aux contacts de raccordement (8a, 8b) disposés dans leurs coins,
- une bille (6) électriquement conductrice est disposée dans la cavité (5),
- les contacts de raccordement (8, 8a, 8b, 8c) sont configurés en tant que colonnettes de contact guidées à travers toutes les couches en forme de plaque (2, 3, 4) et
- la plaque de recouvrement (4) présente une piste conductrice (9) qui est connectée à la plaque de base (4) par le biais de la colonnette de contact (8) sans qu'il ne se produise de connexion électrique avec à surface de contact (14) de la plaque de base (4),
- la plaque de recouvrement, la plaque de base ainsi que les surfaces internes (7) de la cavité (5) de la plaque formant chambre sont isolées électriquement les unes des autres.

2. Capteur de mouvement selon la revendication 1, **caractérisé en ce que** les couches en forme de plaque (2, 3, 4) sont configurées sous forme carrée.

3. Capteur de mouvement selon l'une quelconque des revendications 1 ou 2, **caractérisé en ce que** les pistes conductrices (9a, 9b) de la plaque formant chambre (3) relient de manière électriquement conductrice la paroi interne (7) de la cavité (5) aux contacts de raccordement (8a, 8b).

4. Capteur de mouvement selon la revendication 2 ou 3, **caractérisé en ce que** les contacts de raccordement (8) configurés sous forme de colonnette de contact sont disposés au niveau des coins des couches (2, 3, 4) en forme de plaque configurées sous forme carrée.

5. Capteur de mouvement selon l'une quelconque des revendications précédentes, **caractérisé en ce qu'**il comprend plusieurs capteurs individuels (10, 11, 12, 13) qui sont disposés parallèlement de telle sorte que leurs pistes conductrices (9) relient de manière électriquement conductrice les surfaces internes (7) des parois des cavités (5) à un point de raccordement central unique (8).

6. Capteur de mouvement selon la revendication 5, **caractérisé en ce que** le contact de raccordement central (8) est formé à partir des coins des couches de forme rectangulaire (2, 3, 4) des capteurs disposés parallèlement (10, 11, 12, 13).

7. Capteur de mouvement selon la revendication 6, **caractérisé en ce qu'**il est constitué de quatre capteurs individuels (10, 11, 12, 13).

8. Capteur de mouvement selon l'une quelconque des revendications précédentes, **caractérisé en ce que** les capteurs individuels ont une taille comprise entre 1 et 20 mm².

9. Capteur de mouvement selon l'une quelconque des revendications précédentes, **caractérisé en ce que** le diamètre de la bille est compris entre 0,3 et 2 mm.

10. Capteur de mouvement selon l'une quelconque des revendications précédentes, **caractérisé en ce qu'**à l'intérieur de la surface interne de la plaque de base est prévu un renfoncement, mais pas de rehaussement.

11. Capteur de mouvement selon la revendication 10, **caractérisé en ce que** le renfoncement a une profondeur de 10 µm à 100 µm.
